# DEMANDE DE BREVET EUROPEEN

(11) **EP 0 910 196 A1**
(43) Date de publication de la demande: **21.04.1999**
(21) Numéro de dépôt: 98402296.2
(22) Date de dépôt: 17.09.1998
(51) Int. Cl.: H04L 12/58

(54) **Transmission de courrier électronique entre un serveur et un modem**

(30) Priorité: 22.09.1997 FR 9711745
(71) Demandeur: Olitec, 54220 Malzeville (FR)
(72) Inventeur: Charbit, Daniel, 54425 Pulnoy (FR); Socchard, Sébastien, 75019 Paris (FR); Arnal, Frank, 93310 Le Pré Saint Gervais (FR)
(74) Mandataire: Joly, Jean-Jacques

(57) **Abrégé**

Un serveur et un modem associé à un terminal sont reliés à un réseau de télécommunication. Le modem interroge (E1,E5) le serveur à des instants prédéterminés indépendamment du terminal, c'est-à-dire par exemple même lorsque le terminal est éteint. En réponse à l'interrogation du serveur par le modem, le serveur transmet (E12) vers le modem des messages électroniques mémorisés dans le serveur, destinés au terminal et provenant d'autres terminaux raccordés au réseau de télécommunication. Le modem mémorise (E14) les messages électroniques transmis par le serveur. Ces messages électroniques pourront être ultérieurement récupérés (E18) par le terminal, par exemple au moment de sa mise en marche. Ce procédé peut être appliqué notamment au réseau Internet.

## Description

La présente invention concerne un procédé de transmission de courrier électronique entre un serveur et un modem à travers un réseau de télécommunication. Le serveur est typiquement un serveur de fournisseur de services, tel qu'un serveur d'accès au réseau Internet. Le modem permet de connecter un ou plusieurs terminaux informatique, ou ordinateurs, sur le réseau de télécommunication.

Dans la technique antérieure, pour acheminer un message électronique (en anglais : E-mail) depuis un premier terminal, équipé d'un premier modem, vers un second terminal, équipé d'un second modem, à travers le réseau Internet, le premier terminal établit tout d'abord une communication avec un serveur de fournisseur de services pour transmettre à ce dernier le message électronique et l'adresse électronique du second terminal. Le serveur mémorise le message électronique, qui pourra être ultérieurement lu par le second terminal. Ainsi, les messages électroniques destinés à un terminal ne peuvent être reçus au niveau du terminal que lorsque celui-ci est allumé. Ceci entraîne des risques de perte de messages, notamment lorsque l'utilisateur du terminal est absent pendant une longue période de temps et ne peut consulter pendant cette période son courrier électronique stocké dans le serveur de fournisseur de services. Dans un tel cas en effet, une partie de son courrier électronique peut être effacée par le fournisseur de services pour libérer de la place en mémoire dans le serveur.

Des modems actuellement disponibles sur le marché sont capables de recevoir et mémoriser des données représentatives de télécopies ou de messages vocaux, indépendamment de l'état marche/arrêt du terminal auquel ils sont reliés. Ces modems, tels que le modem « Self-memory 33600 » (marque déposée) fabriqué par la société française OLITEC, l'une des présentes demanderesses, comportent une mémoire qui stocke les données reçues même lorsque le terminal associé est éteint. Les données mémorisées dans le modem sont alors fournies au terminal soit automatiquement dès la mise en marche de ce dernier, soit sur requête du terminal après sa mise en marche.

Ces modems sont conçus essentiellement pour le stockage de données, telles que des télécopies ou des messages vocaux, qui sont directement transmises à travers le réseau de télécommunication commuté public depuis un terminal appelant.

Il pourrait être envisagé d'utiliser un modem comparable à ceux décrits ci-dessus, pour recevoir et mémoriser des messages électroniques transmis sur le réseau Internet par l'intermédiaire d'un fournisseur de services. Toutefois, cette solution nécessiterait de compléter la prestation fournie par le fournisseur de services. Le fournisseur de services devrait en effet retransmettre automatiquement vers les abonnés destinataires les messages électroniques reçus par ses serveurs et destinés aux abonnés disposant d'un tel modem, tout en continuant à transmettre les messages électroniques destinés aux autres abonnés, disposant d'un modem « classique », seulement lorsque les terminaux de ces autres abonnés sont allumés et demandent à consulter leur courrier électronique. Deux types d'abonnés différents devraient ainsi être pris en compte par le fournisseur de services pour la gestion courante du courrier électronique. Un contrat spécifique devrait en outre être prévu entre le fournisseur de services et l'utilisateur d'un tel modem, ce qui augmenterait le coût de l'abonnement pour l'utilisateur vis-à-vis du fournisseur de services. Par ailleurs, l'utilisateur de ce modem ne pourrait sélectionner de manière pratique les heures auxquelles il souhaite que son courrier électronique lui soit transmis.

Un besoin existe donc d'un procédé de transmission de courrier électronique entre un serveur et un modem associé à un ordinateur, qui permette au modem de recevoir et mémoriser des messages électroniques même lorsque l'ordinateur est éteint, et qui évite toute retransmission automatique de messages électroniques par le serveur vers le modem.

A cette fin, un procédé de transmission de courrier électronique à travers un réseau de télécommunication entre un serveur, dans lequel est mémorisé au moins un message électronique destiné à un ordinateur, et un modem associé à l'ordinateur, est caractérisé en ce qu'il comprend les étapes suivantes :
- interrogation du serveur par le modem à travers le réseau de télécommunication à au moins un instant prédéterminé et indépendamment de l'état de l'ordinateur,
- en réponse à l'interrogation du serveur, transmission dudit au moins un message électronique depuis le serveur vers le modem à travers le réseau de télécommunication, et
- mémorisation dudit au moins un message électronique dans le modem.

Le procédé comprend en outre une étape consistant à transmettre à l'ordinateur ledit au moins un message électronique mémorisé dans le modem.

L'expression « état de l'ordinateur » signifie soit que l'ordinateur est non connecté physiquement au modem, soit qu'il est connecté physiquement au modem et allumé, soit qu'il est connecté physiquement au modem et éteint.

Ainsi, le serveur mémorise le courrier électronique reçu de la même manière quel que soit l'abonné destinataire de ce courrier, et attend dans tous les cas d'être sollicité pour transmettre ce courrier électronique vers l'abonné destinataire. Le serveur peut donc être conçu pour traiter indifféremment des requêtes provenant de modems ou de terminaux.

Si l'ordinateur est éteint lors de la mémorisation du message électronique dans le modem, le message électronique mémorisé dans le modem est récupéré par l'ordinateur après la mise en marche de celui-ci, soit automatiquement dès la mise en marche, soit sur demande de l'ordinateur.

L'instant prédéterminé est mémorisé dans le modem et peut être programmé par un utilisateur du modem. Cet instant est compris par exemple dans une période de tarification basse des communications sur le réseau de télécommunication et/ou dans une période où le serveur est peu sollicité. Ainsi, le modem peut rapidement récupérer et stocker des messages électroniques tout en minimisant les coûts de communication.

De préférence, les étapes de transmission du message électronique vers le modem et de mémorisation du message électronique dans le modem sont mises en oeuvre pour le message électronique seulement si ce dernier a une taille au plus égale à une taille maximale présélectionnée par un utilisateur. Ceci évite la mémorisation de trop longs messages dans le modem qui encombreraient la mémoire de celui-ci.

Si ledit au moins un message électronique a une taille supérieure à la taille maximale présélectionnée, les étapes suivantes peuvent être prévues en réponse à l'interrogation du serveur par le modem :
- transmission d'un identificateur dudit au moins un message électronique depuis le serveur vers le modem à travers le réseau de télécommunication, et
- mémorisation de l'identificateur dudit au moins un message électronique dans le modem, de sorte que cet identificateur puisse être récupéré par l'ordinateur.

L'identificateur du message électronique comprend la taille du message et éventuellement un titre de celui-ci.

Typiquement, l'étape d'interrogation du serveur par le modem comprend les étapes suivantes : établissement d'une communication entre le modem et le serveur à travers le réseau de télécommunication à l'instant prédéterminé et indépendamment de l'état de l'ordinateur, et transmission depuis le modem vers le serveur d'au moins un identificateur d'un utilisateur du modem et/ou de l'ordinateur. L'identificateur précité comprend par exemple un code d'accès et/ou un mot de passe.

Une étape de rupture automatique de la communication entre le modem et le serveur peut être prévue après l'étape de mémorisation du message électronique dans le modem. La rupture de la communication peut être effectuée à l'initiative du serveur ou du modem.

De préférence, l'étape de mémorisation du message électronique est précédée par une étape de compression du message électronique dans le modem, afin d'optimiser l'occupation de la mémoire stockant les messages électroniques dans le modem. Une décompression du message électronique est alors mise en oeuvre par le modem immédiatement avant la récupération du message électronique par le terminal.

Le procédé conforme à l'invention peut en outre comprendre une étape d'effacement du message électronique dans le serveur après l'étape de mémorisation du message électronique dans le modem.

La présente invention concerne également un procédé de récupération de courrier électronique par un modem depuis un serveur à travers un réseau de télécommunication, le modem étant associé à un terminal, au moins un message électronique destiné au terminal étant mémorisé dans le serveur, caractérisé en ce qu'il comprend les étapes suivantes :
- interrogation du serveur par le modem à travers le réseau de télécommunication à au moins un instant prédéterminé et indépendamment de l'état du terminal, et
- mémorisation dans le modem dudit au moins un message électronique reçu du serveur suite à l'interrogation du serveur par le modem, de sorte que ledit au moins un message électronique puisse être récupéré par le terminal.

La présente invention concerne également un modem pour la mise en oeuvre des procédés ci-dessus. Le modem est relié à un réseau de télécommunication et associé à un terminal. La liaison entre le modem et le terminal est une liaison filaire, ou une liaison sans fil de type radioélectrique ou infrarouge. Le modem est caractérisé en ce qu'il comprend :
- un moyen d'interrogation pour interroger un serveur relié au réseau de télécommunication à au moins un instant prédéterminé indépendamment de l'état du terminal, et
- un moyen de mémorisation pour mémoriser au moins un message électronique reçu du serveur suite à une interrogation du serveur par ledit moyen d'interrogation.

Afin que le terminal puisse récupérer le message électronique, le modem comprend un moyen pour transmettre le message électronique au terminal.

Le modem peut également comprendre un moyen pour comprimer le message électronique avant une mémorisation du message électronique par le moyen de mémorisation.

Typiquement, le moyen d'interrogation comprend un moyen pour établir une communication à l'instant prédéterminé entre le modem et le serveur à travers le réseau de télécommunication indépendamment de l'état du terminal, et un moyen pour transmettre au moins un identificateur d'un utilisateur du modem et/ou du terminal au serveur.

Un moyen peut alors être prévu dans le modem pour rompre la communication entre le modem et le serveur une fois le message électronique reçu et mémorisé par le modem.

Le modem peut en outre comprendre un moyen pour transmettre au serveur une taille maximum indiquant qu'aucun message électronique de taille supérieure à la taille maximum ne doit être transmis au modem, et/ou un moyen pour accepter ou refuser la transmission du serveur vers le modem d'un message électronique en fonction d'une taille de ce message préalablement reçue du serveur.

D'autres caractéristiques et avantages de l'invention ressortiront de la description suivante de modes particuliers de réalisation, donnés à titre d'exemple en référence aux dessins annexés, sur lesquels :
- la figure 1 est un bloc-diagramme d'un système de transmission de courrier électronique selon une première réalisation de l'invention ;
- la figure 2 est un bloc-diagramme d'un modem conforme à l'invention utilisé dans le système de la figure 1;
- la figure 3 est un algorithme de transmission de courrier électronique entre le serveur et le modem de la figure 1 ; et
- la figure 4 est un bloc-diagramme d'un système de transmission de courrier électronique selon une seconde réalisation de l'invention.

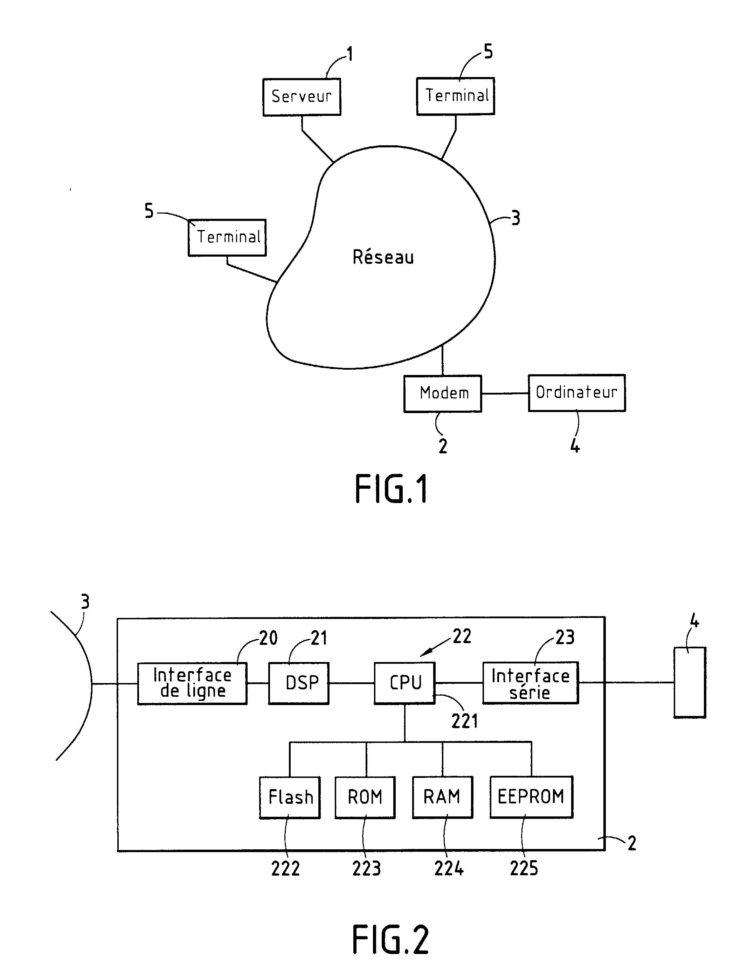

En référence à la figure 1, selon une première réalisation de l'invention, un serveur de fournisseur de services 1 et un modem 2 sont raccordés à un réseau de télécommunication 3, tel que le réseau téléphonique commuté public, le réseau numérique à intégration de services (RNIS) ou un réseau de type X25. Un terminal 4, de type micro-ordinateur PC (Personal Computer), est relié au modem 2. Le serveur de fournisseur de services 1 est par exemple un serveur d'accès au réseau Internet, et contient des boîtes aux lettres électroniques pour mémoriser des messages électroniques (en anglais :E-mails) reçus sur le réseau Internet et destinés à des abonnés du fournisseur de services correspondant. L'utilisateur du terminal 4 est abonné au réseau Internet auprès dudit fournisseur de services, et peut notamment échanger, via le serveur 1, des messages électroniques avec d'autres abonnés utilisant des terminaux 5 équipés chacun d'un modem (non représenté).

Les messages électroniques provenant de terminaux 5 et destinés au terminal 4 sont ainsi mémorisés dans le serveur de fournisseur de services 1. De manière classique, lorsque le terminal 4 est allumé et connecté sur le serveur 1, l'utilisateur de ce terminal peut aller consulter son courrier électronique stocké dans le serveur 1. L'utilisateur du terminal 4 peut en outre envoyer des messages électroniques vers d'autres terminaux 5 via le serveur 1.

Conformément à l'invention, lorsque le modem 2 n'est pas sollicité pour l'émission/réception de données, c'est-à-dire par exemple lorsque le terminal 4 est éteint, ou est allumé mais n'est pas en communication sur le réseau de télécommunication 3, le modem 2 interroge le serveur 1 à des instants prédéterminés, indépendamment du terminal 4 associé, afin de consulter le courrier électronique adressé au terminal 4. Ce courrier électronique est alors téléchargé puis mémorisé dans le modem 2, pour être ultérieurement transmis au terminal 4, par exemple sur requête de ce terminal.

La figure 2 montre plus en détail la structure du modem 2 conforme à l'invention. Le modem 2 comprend une interface de ligne 20, un processeur de traitement de signal 21, une unité de gestion 22 et une interface série 23.

L'interface de ligne 20 permet d'adapter le modem 2 au réseau de télécommunication 3. Le processeur de traitement de signal 21, de type DSP (Digital Signal Processor), assure les fonctions classiques de modulation et démodulation du modem 2. L'unité de gestion 22 gère d'une part l'émission et la réception de données de la même manière que dans un modem conventionnel, et d'autre part l'interrogation du serveur 1, la mémorisation des messages électroniques reçus et la transmission des messages électroniques mémorisés vers le terminal 4. L'interface série 23 permet de connecter le terminal 4 au modem 2.

L'unité de gestion 22 inclut principalement un microprocesseur 221, une mémoire non volatile 222, de type Flash, pour mémoriser les messages électroniques reçus, une mémoire morte ROM (Read Only Memory) 223 contenant des programmes de gestion du modem exécutés par le microprocesseur 221, une mémoire vive RAM (Random Access Memory) 224 pour mémoriser temporairement des données pendant l'exécution des programmes de gestion, et une mémoire non volatile programmable EEPROM (Electrical Erasable Programmable Read Only Memory) 225 dont le rôle est expliqué ci-dessous.

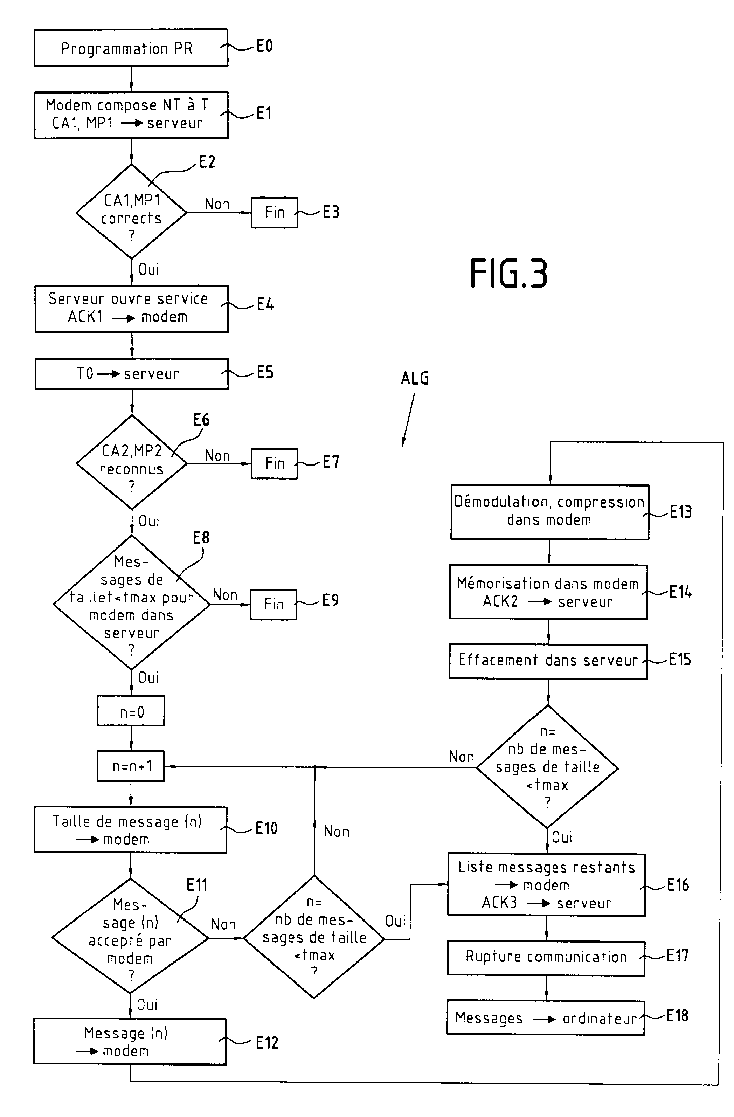

La figure 3 montre un algorithme ALG de transmission de courrier électronique conforme à l'invention, mis en oeuvre pour partie par le microprocesseur 221 du modem 2 et pour partie par le serveur de fournisseur de services 1.

A une étape préliminaire E0, l'utilisateur du modem 2 configure le modem en programmant sur le terminal 4 des paramètres PR qui sont ensuite fournis au modem 2 et stockés dans la mémoire EEPROM 225 réservée pour ces paramètres. Les paramètres PR comprennent notamment :
- le numéro téléphonique NT du serveur de fournisseur de services 1,
- un premier code d'accès (en anglais: login ) CA1 et un premier mot de passe MP1,
- un second code d'accès CA2 et un second mot de passe MP2,
- des instants T auxquels l'utilisateur souhaite que le modem 2 interroge le serveur 1,
- la taille maximum tmax souhaitée, exprimée en nombre d'octets, de chaque message électronique à recevoir dans le modem 2,
- un premier paramètre d'option P1 prenant des première et second valeurs pour respectivement pour indiquer si une liste des messages de taille supérieure à la taille tmax doit ou non être transmise au modem 2 par le serveur 1 en plus du contenu des messages de taille inférieure ou égale à la taille tmax, et
- un second paramètre d'option P2 prenant des troisième et quatrième valeurs pour respectivement indiquer si les messages électroniques à transmettre au modem 2 par le serveur 1 doivent ou non être effacés dans le serveur après leur transmission.

Le premier code d'accès CA1 et le premier mot de passe MP1 constituent des identificateurs du service de courrier électronique mis en oeuvre par le serveur 1 conformément à l'invention. Plus précisément, lorsque le serveur 1 reçoit le code CA1 et le mot de passe MP1, il reconnaît que l'appelant souhaite récupérer son courrier électronique.

Le second code d'accès CA2 et le second mot de passe MP2 sont des identificateurs de l'utilisateur du modem 2 et du terminal 4, et donc de la boîte aux lettres électronique associée à cet utilisateur dans le serveur 1. Le code d'accès CA2 et le mot de passe MP2 peuvent être identiques à ceux normalement composés par l'utilisateur sur le terminal 4 pour se connecter au réseau Internet via le serveur de fournisseur de services 1.

Les instants T correspondent à une ou des heures de la journée choisies en fonction de critères particuliers par l'utilisateur. Typiquement, les instants T sont compris dans des périodes de tarification basse pour les communications sur le réseau de télécommunication 3.

Le paramètre de taille tmax permet à l'utilisateur de gérer l'occupation de la mémoire 222 et d'éviter que des messages trop longs encombrent la mémoire. Le paramètre tmax peut toutefois avoir une valeur qui signifie « taille illimitée ».

A partir d'une étape E1 de l'algorithme ALG de la figure 3, le modem 2 interroge le serveur 1 pour consulter les éventuels messages électroniques mémorisés pour le terminal 4 dans le serveur. A cet effet, le modem 2 compose le numéro téléphonique NT du serveur 1, à un instant prédéterminé T, et indépendamment du terminal 4. Le serveur 1 répond par l'envoi vers le modem 2 d'un message de signalisation de type « CONNEXION » pour mettre en communication le serveur 1 et le modem 2 à travers le réseau de télécommunication 3. Le serveur 1 invite par ailleurs le modem 2 à lui fournir un code d'accès et un mot de passe.

Le premier code d'accès CA1 et le premier mot de passe MP1 sont alors transmis par le modem 2 au serveur 1 puis vérifiés par ce dernier. Si, à une étape E2, l'un des éléments CA1 et MP1 n'est pas reconnu par le serveur, l'algorithme ALG est terminé à une étape E3 par l'envoi depuis le serveur 1 vers le modem 2 d'un message d'erreur du type « code d'accès et/ou mot de passe incorrects» suivi de la rupture de la communication entre le modem 2 et le serveur 1. Le message d'erreur précité est mémorisé dans le modem 2, pour être fourni au terminal 4 suite par exemple à une requête de celui-ci.

Si le premier code d'accès CA1 et le premier mot de passe MP1 sont corrects, et désignent bien le service de transmission de courrier électronique conforme à l'invention, le serveur 1 ouvre ce service et transmet un signal d'accusé de réception ACK1 au modem 2 à une étape E4.

A une étape suivante E5, le modem 2 transmet une trame d'options TO au serveur 1. La trame d'options TO contient le second code d'accès CA2, le second mot de passe MP2, la taille maximale souhaitée tmax des messages électroniques, ainsi que les premier et second paramètres d'option P1 et P2.

A une étape E6, le serveur 1 vérifie le code d'accès CA2 et le mot de passe MP2. Si l'un des éléments CA2, MP2 n'est pas reconnu par le serveur 1, l'algorithme ALG est terminé à une étape E7 par l'envoi depuis le serveur 1 vers le modem 2 d'un message d'erreur du type « code d'accès et/ou mot de passe inconnus» suivi de la rupture de la communication entre le modem 2 et le serveur 1. Le message d'erreur précité est mémorisé dans le modem 2, pour être fourni au terminal 4 suite par exemple à une requête de celui-ci.

Si le second code d'accès CA2 et le second mot de passe MP2 désignant l'utilisateur du modem 2 et du terminal 4 sont reconnus par le serveur 1, le serveur 1 détermine à une étape E8 s'il existe des messages électroniques de taille inférieure ou égale à la taille maximale souhaitée tmax dans la boîte aux lettres associée à cet utilisateur. Si aucun message de taille inférieure ou égale à la taille tmax n'est présent dans cette boîte aux lettres, l'algorithme ALG est terminé à une étape E9 par l'envoi d'un message de fin du serveur 1 vers le modem 2 suivi de la rupture de la communication entre le modem et le serveur. Le message de fin ci-dessus est mémorisé dans le modem 2, pour être ensuite fourni au terminal 4.

Ce message de fin est du type « pas de message » si aucun message, même de taille quelconque, n'est stocké dans le serveur 1 pour l'utilisateur du modem 2. En revanche, s'il existe des messages dans le serveur 1 pour l'utilisateur du modem 2 qui ont une taille supérieure à la taille tmax, et si le premier paramètre d'option P1 est à la première valeur, le message de fin -contient une liste de ces messages, et indique notamment la taille de chacun de ces messages.

Si, à l'étape E8, il existe des messages électroniques de taille inférieure ou égale à la taille tmax pour le terminal 4 dans le serveur 1, alors une boucle comprenant des étapes E10 à E14 est mise en oeuvre pour chacun de ces messages. A l'étape E10, le serveur 1 transmet la taille du message au modem 2. A l'étape E11, le modem 2 indique au serveur 1 s'il accepte ou non le message. Le modem 2 peut notamment refuser le message si auparavant (au cours de boucles E10-E14 précédentes) il a déjà reçu un nombre important de messages et la capacité maximale de la mémoire 222 serait dépassée s'il recevait aussi ce message. Si le message est refusé à l'étape E11, le serveur 1 envoie au modem 2 la taille du message suivant, et ainsi de suite. Si le message est accepté par le modem 2 à l'étape E11, le serveur 1 transmet ce message au modem 2 à l'étape E12. Les données représentatives du message sont démodulées par le processeur DSP 21 puis comprimées par le microprocesseur 221 à l'étape E13, pour être mémorisées dans la mémoire Flash 222 à l'étape E14. La compression effectuée à l'étape E13 est basée sur une technique de compression connue, par exemple une technique de compression dite de « Lempel et Ziv». Une fois la mémorisation du message dans le modem 2 terminée, le modem 2 renvoie au serveur 1 un signal d'accusé de réception ACK2. Si le second paramètre d'option P2 est à la troisième valeur, le message transmis par le serveur 1 au modem 2 est effacé, à une étape E15, dans la boîte aux lettres associée au modem 2 du serveur 1 en réponse à la réception par le serveur du signal d'accusé de réception ACK2.

Lorsque tous les messages de taille inférieure ou égale à la taille tmax destinés à l'utilisateur et acceptés par le modem 2 ont été reçus et mémorisés par le modem 2, une liste (des tailles respectives) des messages restant dans le serveur 1 pour l'utilisateur est transmise au modem 2 à une étape E16 si le premier paramètre d'option P1 est à la première valeur. Les messages restant dans le serveur sont soit des messages de taille supérieure à la taille tmax, soit des messages qui ont été refusés par le modem à l'étape E11. Les messages restant dans le serveur pourront être ultérieurement consultés par l'utilisateur via le terminal 4.

A une étape suivante E17, la communication entre le modem 2 et le serveur 1 est rompue, puis l'algorithme ALG retourne à l'étape E1, qui sera mise en oeuvre au prochain instant T mémorisé dans le modem 2.

A une étape E18, le terminal 4 récupère les messages électroniques mémorisés dans la mémoire 222 du modem 2 à un instant auquel le terminal 4 est allumé mais n'est pas en communication sur le réseau 3. En pratique, lors de la mise en marche du terminal 4, un programme approprié est lancé, automatiquement ou sous la commande de l'utilisateur, pour récupérer les messages électroniques mémorisés dans le modem 2. Les messages électroniques récupérés par le terminal 4 sont de préférence intégrés dans une base de données du logiciel habituellement utilisé par le terminal 4 pour communiquer sur le réseau Internet.

Selon une variante de l'invention, le modem 2 peut également directement rompre la communication avec le serveur 1 (étape E17) après l'étape E10, avant que la taille de tous les messages de taille inférieure ou égale à tmax lui aient été transmis, si la capacité de la mémoire 222 est atteinte ou quasiment atteinte.

Il ressort de la description ci-dessus, que le modem 2 peut interroger le serveur 1 à des instants prédéterminés T lorsque le modem 2 n'est pas sollicité par le terminal 4. Un intérêt important du procédé conforme à l'invention est de pouvoir aller récupérer, à des instants choisis, du courrier électronique dans le serveur 1 alors que le terminal 4 est éteint. Toutefois, le courrier électronique peut également être récupéré par le modem 2 alors que le terminal 4 est allumé mais n'est pas en communication sur le réseau de télécommunication 3. Si le terminal 4 sollicite le modem 2 pour communiquer sur le réseau de télécommunication 3, ou le réseau Internet, tandis que l'algorithme ALG est en cours d'exécution, l'algorithme ALG est mené jusqu'à son terme, c'est-à-dire jusqu'à atteindre l'une des étapes E7, E9 et E17. Egalement, si le terminal 4 est en communication sur le réseau de télécommunication 3 par l'intermédiaire du modem 2 à l'un des instants prédéterminés T mémorisés dans le modem, priorité est donnée à la communication en cours, et l'algorithme ALG n'est pas déclenché à cet instant.

Si le modem 2 ne peut déclencher l'étape E1 à l'instant T, soit parce que le modem est déjà sollicité par le terminal 4 pour une communication sur le réseau 3 comme indiqué ci-dessus, soit parce que la ligne de télécommunication desservant le serveur 1 est occupée, le modem 2 réessaie d'interroger le serveur 1 à des intervalles de temps réguliers, au maximum jusqu'à un nombre prédéterminé de tentatives. En pratique, 3 ou 4 tentatives d'interrogation du serveur à 3 ou 4 minutes d'intervalle peuvent être effectuées par le modem. La durée des intervalles de temps réguliers et le nombre prédéterminé de tentatives peuvent être compris dans les paramètres PR programmés par l'utilisateur à l'étape préliminaire E0.

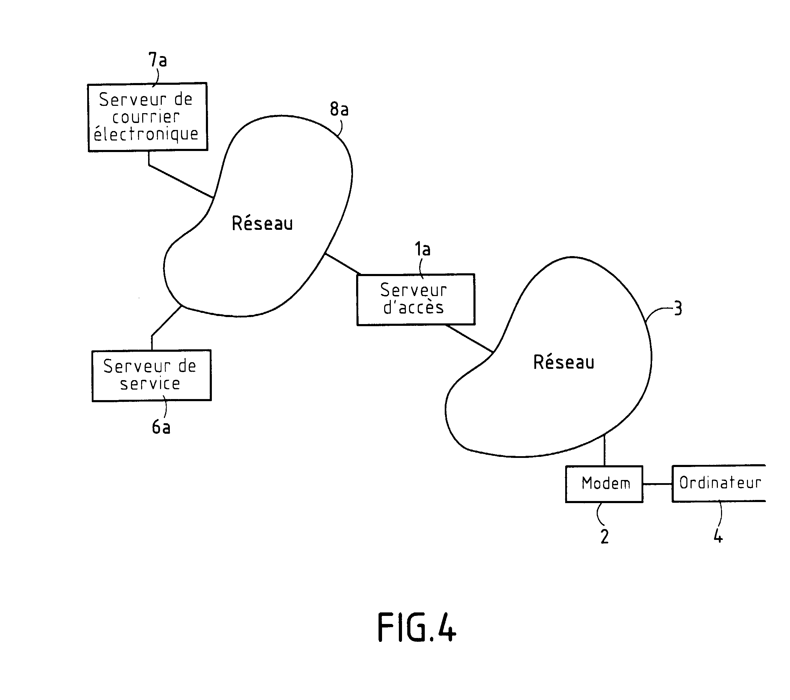

La figure 4 montre une seconde réalisation de l'invention. Sur la figure 4, les même repères que sur la figure 1 sont utilisés pour désigner des éléments identiques. La seconde réalisation de l'invention diffère de celle montrée à la figure 1 en ce que plusieurs serveurs de fournisseur de services la, 6a et 7a sont utilisés. Les serveurs 1a, 6a et 7a sont respectivement un serveur d'accès distant, un serveur de service et un serveur de courrier électronique. Les serveurs 1a, 6a et 7a sont reliés entre eux à travers un réseau de télécommunication 8a, comprenant par exemple un réseau local de type LAN (Local Area Network) et/ou un réseau longue distance de type WAN (Wide Area Network). Le serveur 1a est relié au réseau de télécommunication 3. Les réseaux de télécommunication 3 et 8a peuvent être partiellement confondus.

A la différence de la réalisation de la figure 1, les messages électroniques reçus par le fournisseur de services sur le réseau Internet pour les abonnés du fournisseur de services sont stockés dans le serveur de courrier électronique 7a et non pas dans le serveur d'accès distant la. Le serveur de courrier électronique 7a peut également être un serveur d'un autre fournisseur de services que celui du serveur 1a.

Pour récupérer le courrier électronique destiné à l'utilisateur du modem 2 et du terminal 4, le modem 2 interroge le serveur de courrier électronique 7a et communique avec ce dernier via les serveurs d'accès distant la et de service 6a à travers un réseau de télécommunication formé par la réunion des réseaux 3 et 8a. L'algorithme mis en oeuvre dans le système de la figure 4 diffère de celui de la figure 3 essentiellement en ce que :
- à l'étape E1, le modem 2 compose le numéro téléphonique NT du serveur la et fournit au serveur 1a des premiers code d'accès CA1 et mot de passe MP1 désignant le service de courrier électronique,
- les étapes E2 et E3 sont mises en oeuvre par le serveur 1a,
- à l'étape E4, le serveur la ouvre le service de courrier électronique dans le serveur de service 6a qui entre alors en communication avec le serveur de courrier électronique 7a, lequel transmet un accusé de réception ACK1 au modem,
- à l'étape E5, la trame d'options TO contient également le nom du serveur de courrier électronique 7a et est transmise au serveur 7a via les serveurs 1a et 6a,
   les étapes suivantes E6 à E18 étant mises en oeuvre de la même manière qu'à la figure 3 en remplaçant le serveur 1 par le serveur de courrier électronique 7a.

## Revendications

1. Procédé de transmission de courrier électronique à travers un réseau de télécommunication (3 ;3,8a) entre un serveur (1 ;7a), dans lequel est mémorisé au moins un message électronique (E-mail) destiné à un terminal (4), et un modem (2) associé audit terminal (4), caractérisé en ce qu'il comprend les étapes suivantes :
- interrogation (E1,E5) du serveur (1) par le modem (2) à travers le réseau de télécommunication (3) à au moins un instant prédéterminé (T) et indépendamment de l'état du terminal (4),
- en réponse à l'interrogation du serveur, transmission (E12) dudit au moins un message électronique depuis le serveur (1) vers le modem (2) à travers le réseau de télécommunication (3), et
- mémorisation (E14) dudit au moins un message électronique dans le modem (2), de sorte que ledit au moins un message électronique puisse être récupéré par le terminal (4).

2. Procédé conforme à la revendication 1, selon lequel lesdites étapes de transmission (E12) du message électronique vers le modem et de mémorisation (E14) du message électronique dans le modem sont mises en oeuvre pour ledit au moins un message électronique seulement si ledit au moins un message électronique a une taille au plus égale à une taille maximale (tmax) présélectionnée par un utilisateur du modem (2).

3. Procédé conforme à la revendication 2, selon lequel si ledit au moins un message électronique a une taille supérieure à ladite taille maximale présélectionnée (tmax), les étapes suivantes sont prévues en réponse à l'interrogation du serveur par le modem :
- transmission (E16) d'un identificateur dudit au moins un message électronique depuis le serveur (1) vers le modem (2) à travers le réseau de télécommunication (3), et
- mémorisation (E14) de l'identificateur dudit au moins un message électronique dans le modem (2), de sorte que l'identificateur dudit au moins un message électronique puisse être récupéré par le terminal (4).

4. Procédé conforme à l'une quelconque des revendications 1 à 3, selon lequel ladite étape d'interrogation du serveur par le modem comprend les étapes suivantes :
- établissement (E1) d'une communication entre le modem (2) et le serveur (1) à travers le réseau de télécommunication (3) audit au moins un instant prédéterminé (T) et indépendamment de l'état du terminal (4), et
- transmission (E5) depuis le modem (2) vers le serveur (1) d'au moins un identificateur d'un utilisateur du modem (2) et/ou du terminal (4).

5. Procédé conforme à la revendication 4, selon lequel une étape (E17) de rupture automatique de la communication entre le modem (2) et le serveur (1) est prévue après ladite étape de mémorisation (E14) du message électronique dans le modem.

6. Procédé conforme à l'une quelconque des revendications 1 à 5, selon lequel une étape d'effacement (E15) du message électronique est prévue dans le serveur (1) après ladite étape de mémorisation (E14) du message électronique dans le modem.

7. Procédé de récupération de courrier électronique par un modem (2) depuis un serveur (1 ;7a) à travers un réseau de télécommunication (3 ;3,8a), le modem (2) étant associé à un terminal (4), au moins un message électronique (E-mail) destiné au terminal (4) étant mémorisé dans le serveur (1), caractérisé en ce qu'il comprend les étapes suivantes :
- interrogation (E1,E5) du serveur (1) par le modem (2) à travers le réseau de télécommunication (3) à au moins un instant prédéterminé (T) et indépendamment de l'état du terminal (4), et
- mémorisation (E14) dans le modem (2) dudit au moins un message électronique, reçu (E13) du serveur (1) suite à l'interrogation du serveur par le modem, de sorte que ledit au moins un message électronique puisse être récupéré par le terminal (4).

8. Procédé conforme à la revendication 7, selon lequel le terminal (4) est éteint lors de ladite mémorisation (E10) du message électronique dans le modem, et ledit au moins un message électronique mémorisé dans le modem (2) est récupéré (E11) par le terminal (4) après la mise en marche du terminal.

9. Procédé conforme à la revendication 7 ou 8, selon lequel ledit au moins un instant prédéterminé (T) est mémorisé (E0) dans le modem (2) et peut être programmé par un utilisateur de ce modem.

10. Procédé conforme à l'une quelconque des revendications 7 à 9, selon lequel ladite étape d'interrogation du serveur par le modem comprend les étapes suivantes :
- établissement (E1) d'une communication entre le modem (2) et le serveur (1) à travers le réseau de télécommunication (3) audit au moins un instant prédéterminé (T) et indépendamment de l'état du terminal (4), et
- transmission depuis le modem (2) vers le serveur (1) d'au moins un identificateur d'un utilisateur du modem (2) et/ou du terminal (4).

11. Procédé conforme à l'une quelconque des revendications 7 à 10, selon lequel ladite étape de mémorisation (E14) du message électronique est précédée par une étape de compression (E13) du message électronique reçu par le modem (2).

12. Procédé conforme à l'une quelconque des revendications 7 à il, selon lequel ledit au moins un message électronique comprend un message électronique préalablement généré et transmis au serveur (1) par un autre terminal (5) relié au réseau de télécommunication (3).

13. Modem destiné à être relié à un réseau de télécommunication (3) et à être associé à un terminal (4), caractérisé en ce qu'il comprend :
- un moyen d'interrogation (221, 225) pour interroger un serveur (1) relié au réseau de télécommunication (3) à au moins un instant prédéterminé (T) indépendamment de l'état du terminal (4), et
- un moyen de mémorisation (221, 222) pour mémoriser au moins un message électronique reçu du serveur (1) suite à une interrogation du serveur par ledit moyen d'interrogation (22).

14. Modem conforme à la revendication 13, comprenant en outre un moyen (22,23) pour transmettre ledit au moins un message électronique au terminal (4).

15. Modem conforme à la revendication 13 ou 14, comprenant en outre un moyen (221) pour comprimer ledit au moins un message électronique avant une mémorisation dudit au moins un message électronique par ledit moyen de mémorisation (22).

16. Modem conforme à l'une quelconque des revendications 13 à 15, dans lequel ledit moyen d'interrogation comprend un moyen pour établir une communication audit instant prédéterminé (T) entre le modem (2) et le serveur (1) à travers le réseau de télécommunication (3) indépendamment de l'état du terminal (4), et un moyen pour transmettre au moins un identificateur d'un utilisateur du modem (2) et/ou du terminal (4) au serveur (1).

17. Modem conforme à la revendication 16, comprenant en outre un moyen (22) pour rompre la communication entre le modem et le serveur.

18. Modem conforme à l'une quelconque des revendications 13 à 17, comprenant en outre un moyen (22) pour transmettre au serveur (1) une taille maximum (tmax) indiquant qu'aucun message électronique de taille supérieure à la taille maximum ne doit être transmis au modem.

19. Modem conforme à l'une quelconque des revendications 13 à 18, comprenant en outre un moyen (22) pour accepter ou refuser un message électronique en fonction d'une taille de ce message électronique préalablement reçue du serveur (1).
